# EUROPÄISCHE PATENTSCHRIFT

(11) **EP 0 200 262 B1**
(45) Veröffentlichungstag und Bekanntmachung des Hinweises auf die Patenterteilung: **03.03.1993**
(21) Anmeldenummer: 86200671.5
(22) Anmeldetag: 22.04.1986
(51) Int. Cl.: G06F 15/68

(54) **Verfahren zum Trennen bewegter Strukturen von festem Hintergrund in einer Folge von Röntgen-Projektionsbildern und Vorrichtung für dieses Verfahren**
Method and device for the separation of mobile structures from a fixed background in a sequence of X-ray image projections
Procédé et dispositif de séparation de structures mobiles d'un fond fixe dans une suite d'images de projection à rayons X

(30) Priorität: 24.04.1985 DE 3514683
(43) Veröffentlichungstag der Anmeldung: 05.11.1986
(73) Patentinhaber: Philips Patentverwaltung GmbH, 22335 Hamburg (DE); Philips Electronics N.V., 5621 BA Eindhoven (NL)
(72) Erfinder: Haaker, Paul Rudolf, D-2000 Hamburg 61 (DE); Klotz, Erhard Paul Artur, D-2083 Halstenbek (DE); Koppe, Reiner Heinrich, D-2000 Hamburg 61 (DE); Linde, Rolf Erich, D-2081 Haseldorf (DE)
(74) Vertreter: Hartmann, Heinrich, Dipl.-Ing.

(56) Entgegenhaltungen:
- EP-A- 0 102 592
- RADIOLOGY, Band 151, Nr. 2, 1984, Seiten 517-520; C.W. HARDIN et al.: "Real-time digital angiocardiography using a temporal high-pass filter"
- IEEE TRANSACTIONS ON NUCLEAR SCIENCE, Band NS-29, Nr. 3, Juni 1982, Seiten 1176-1180, IEEE, New York, US; W.R. BRODY et al: "Digital subtraction angiography"

## Beschreibung

Die Erfindung betrifft ein Verfahren zum Trennen bewegter Strukturen von festem Hintergrund in einer Folge von Röntgen-Projektionsbildern eines zu untersuchenden Objektes, wobei von jedem Projektionsbild der Folge ein dem Hintergrund zugeordnetes Maskenbild subtrahiert wird, das Bildpunkt für Bildpunkt aus den Bildwerten von Projektionsbildern der Folge abgeleitet wird. Außerdem bezieht sich die Erfindung auf eine Vorrichtung zur Durchführung eines solchen Verfahrens.

Ein solches Verfahren und eine solche Vorrichtung können beispielsweise bei der angiographischen Untersuchung der Herzkranzgefäße eingesetzt werden. Dabei wird dem Patienten ein Kontrastmittel in die Herzkranzgefäße eingespritzt. Diese bewegen sich während eines Herzzyklus bis zu einigen Zentimetern vor einem Hintergrund, der für wenige Herzzyklen als ruhend bzw. fest angenommen werden kann. Da sich dieser Hintergrund jedoch beispielsweise infolge der Atmung des Patienten während längerer Zeiträume bewegt, kann die übliche Zeit-Subtraktionsangiographie mit einer Leeraufnahme (Maske), bei der von der Folge der nach Verabfolgung eines Kontrastmittels aufgenommenen Projektionsbilder ein Projektionsbild des gleichen Objektes vor der Injektion des Kontrastmittels subtrahiert wird, nicht zufriedenstellend angewandt werden. Man erzeugt in diesem Fall den nötigen Bildkontrast durch eine hohe Dosis des Kontrastmittels.

In der Zeitschrift "Radiology" Vol. 151, Nummer 2, Seiten 517 bis 520 ist ein Verfahren der eingangs genannten Art beschrieben, das diesen Nachteil vermeiden soll. Das Maskenbild wird dabei dadurch erzeugt, daß eine Anzahl von Projektionsbildern des Objektes (nach der Injektion eines Kontrastmittels) gewichtet gemittelt werden. Die Herzkranzgefäße selbst werden durch die Eigenbewegung über den Hintergrund quasi verschmiert. Das so entstandene Maskenbild wird dann von den Projektionsaufnahmen subtrahiert. Das Maskenbild ist dabei durch die überlagerten und verwischt dargestellten Gefäßstrukturen gestört. In den Bereichen, in denen sich die Gefäße nur wenig bewegen, treten größere Störungen auf, weil dabei die Gefäße zu wenig verwischt werden, so daß ihre Abbildung nach der Subtraktion teilweise unterdrückt wird.

Aufgabe der vorliegenden Erfindung ist es, ein Verfahren der eingangs genannten Art so auszubilden, daß sich ein verbessertes Maskenbild ergibt.

Diese Aufgabe wird erfindungsgemäß dadurch gelöst, daß zur Erzeugung des Maskenbildes die Bildwerte mehrerer Projektionsbilder der Folge verglichen und daß derjenige Bildwert, der der geringsten Absorption entspricht, den Bildwert für den betreffenden Bildpunkt des Maskenbildes bildet.

Eine Vorrichtung zur Durchführung des Verfahrens mit einer Strahlenquelle und einer Bildaufnahmeeinrichtung zum Erzeugen von Röntgen-Projektionsbildern und einem Bildwandler, der die Projektionsbilder in den Bildwerten entsprechende digitale Datenworte umsetzt, umfaßt erfindungsgemäß einen Extremwertdekoder, dem gleichzeitig oder nacheinander die jeweils einem Bildpunkt in verschiedenen Projektionsbildern der Folge zugeordneten Datenworte zugeführt werden und dessen Ausgang dasjenige Datenwort liefert, das der geringsten Absorption entspricht, durch einen Speicher für die Aufnahme der auf diese Weise erzeugten Maskenbildwerte und durch eine Subtrahierschaltung zur Subtraktion der Bildwerte der Projektionsbilder dieser Folge und der Maskenbildwerte.

Die Erfindung basiert auf der Überlegung, daß zwischen den Strukturen und dem Hintergrund ein merkbarer Kontrast vorhanden ist und daß die Strukturen sich vor dem festen Hintergrund bewegen und dabei diesen in einzelnen Phasen, d.h. in einzelnen Projektionsbildern, freigeben. Wenn in einem Bildpunkt der Hintergrund gerade nicht durch die bewegte Struktur verdeckt ist, dann hat das Projektionsbild in diesem Bildpunkt die minimale Absorption. Sucht man auf diese Weise aus verschiedenen Projektionsbildern für jeden Bildpunkt die Bildwerte heraus, die der niedrigsten Absorption entsprechen und stellt aus diesen Bildwerten wiederum ein Bild zusammen, dann ergibt sich ein Bild des Hintergrundes. Dieses Bild dient als Maskenbild.

Es sei an dieser Stelle erwähnt, daß aus der DE-OS 32 37 572 bereits ein Verfahren bekannt ist, bei dem aus mehreren Einzelbildern eines Objektes ein Schichtbild dadurch gebildet wird, daß für jeden Bildpunkt aus den Einzelbildern der Bildwert zur Bildung eines Schichtbildes benutzt wird, der der geringsten Absorption entspricht. Hierbei geht es allerdings nicht um das Trennen bewegter Strukturen von einem festen Hintergrund in einer Folge von Bildern, sondern um die Erzeugung eines Schichtbildes eines feststehenden Objektes aus Einzelbildern mit verschiedener Perspektive.

Außerdem ist aus der EP-A 102 592 ein Verfahren für die Subtraktionsangiographie bekannt, bei dem vor einer Kontrastmittelinjektion eine erste Folge von Röntgenprojektionsbildern erzeugt wird, aus der ein Maskenbild abgeleitet wird und bei dem nach der Kontrastmittelinjektion eine zweite Folge von Röntgenprojektionsbildern erzeugt wird, aus denen Live-Bilder abgeleitet werden, von denen das Maskenbild subtrahiert wird. Das Signal-Rausch-Verhältnis sowohl des Maskenbildes als auch der Live-Bilder, von denen das Maskenbild später subtrahiert wird, wird dadurch verbessert, daß das Maskenbild sowie jedes Live-Bild aus mehreren Projektionsbildern der jeweiligen Folge abgeleitet wird. Diese Ableitung erfolgt dadurch, daß von den verschiedenen Projektionsbildern von jedem Bildpunkt der kleinste (oder der größte) Bildwert herangezogen wird.

Da das Maskenbild aus der ersten Folge (vor der Kontrastmittelinjektion) die Live-Bilder aber aus der zweiten Folge (nach der Kontrastmittelinjektion) abgeleitet werden und sich zwischen den beiden Folgen ein vergleichsweise großer Zeitraum erstreckt, besteht die Gefahr, daß sich beispielsweise durch die Atmung des Patienten der Hintergrund, der durch die Subtraktion eliminiert werden soll, zwischen den beiden Folgen verschiebt, so daß sich Bewegungsartefakte in dem Subtraktionsbild ergeben können.

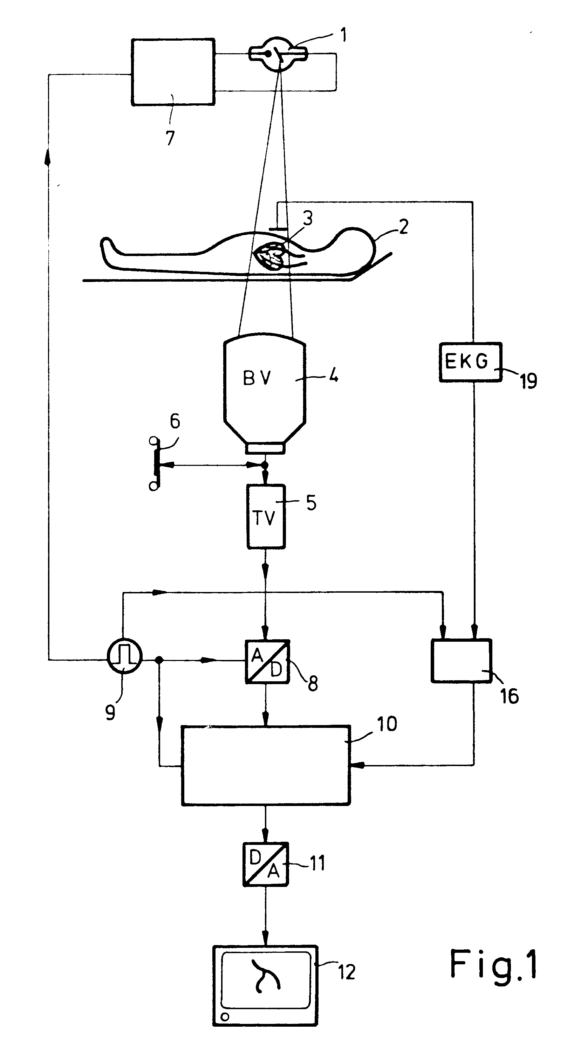

Die Erfindung wird nachstehend anhand der Zeichnung näher erläutert. Es zeigen
- Fig. 1: eine Vorrichtung zur Durchführung des Verfahrens in schematischer Darstellung,
- Fig. 2: einen Teil dieser Vorrichtung und
- Fig. 3: verschiedene Einzelbilder sowie das Maskenbild zur Erläuterung des Verfahrens.

Ein Röntgenstrahler 1 erzeugt ein Strahlenbündel, das einen Patienten 2 durchsetzt, dem zuvor ein Kontrastmittel in die Herzkranzgefäße injiziert worden ist. Diese bewegten Strukturen innerhalb des Patienten 2 werden zusammen mit einem (relativ) festen Hintergrund, den Knochen und den Weichteilen des Patienten, auf den Eingangsschirm eines Bildverstärkers 4 projiziert. Das Ausgangsbild des Bildverstärkers wird mittels einer Fernsehaufnahmeröhre 5 in ein elektrisches Video-Signal umgesetzt. Wie schematisch angedeutet, kann das Ausgangsbild des Bildverstärkers über einen nicht näher dargestellten Bildverteiler auch einer 35 mm Cine-Kamera 6 zugeführt werden.

Das Fernsehsignal wird einem Analog-Digital-Wandler 8 zugeführt. Die Taktimpulse für den Analog-Digital-Wandler 8 werden von einem Taktgenerator 9 geliefert, und zwar nur während der Dauer des eigentlichen Bildsignals, nicht jedoch während der Horizontal- und Vertikal-Rücklaufzeiten, ein Taktsignal. Der Taktgenerator liefert auch Synchronisierimpulse für die Fernsehkamera 5 und den Röntgengenerator 7, so daß die Röntgenröhre impulsweise Strahlung aussendet. Am Ausgang des Analog-Digital-Wandlers 8 erscheint daher eine Folge von Datenworten, die den Helligkeitswerten in benachbarten Bildpunkten entsprechen. Diese Helligkeitswerte werden im folgenden als Bildwerte bezeichnet. Die Bildwerte der Projektionsbilder werden einer Einheit 10 zugeführt, in der einerseits ein den Hintergrund ohne die bewegten Strukturen darstellendes Maskenbild erzeugt und andererseits von den Projektionsbildern jeweils das Maskenbild subtrahiert wird. Die so erzeugtenSubtraktionsbilder, die dann im wesentlichen nur noch die sich bewegenden Strukturen darstellen, werden dann über einen Digital-Analog-Wandler 11 einer Bildwiedergabeeinheit 12 zugeführt.

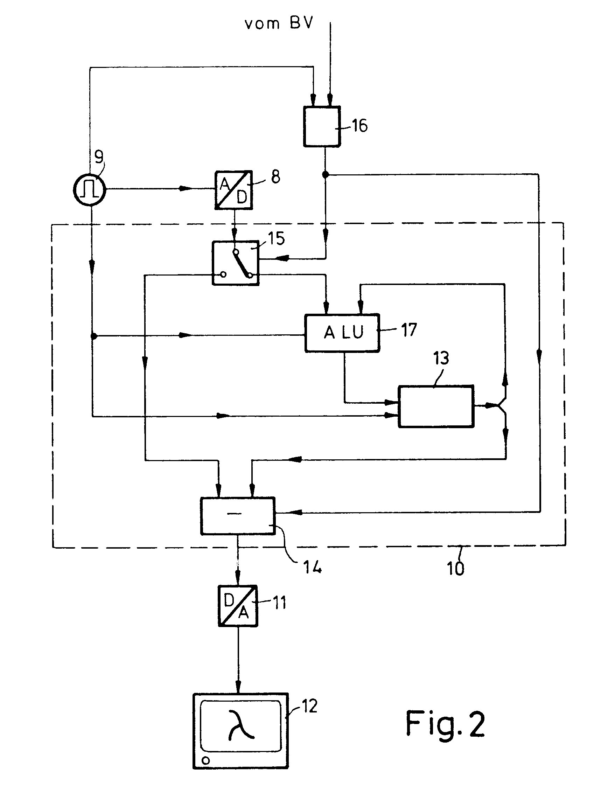

Wie aus Fig. 2 hervorgeht, enthält die Einheit 10 einen Speicher 13, dessen Speicherkapazität zur Aufnahme der Bildwerte eines Projektionsbildes ausreicht. In diesen Speicher sind die Bildwerte eines Maskenbildes gespeichert, das den Hintergrund der Projektionsbilder darstellt. Der Aufruf der Bildwerte aus dem Speicher 13 wird u.a. durch den Taktgenerator 9 so gesteuert, daß jeweils der Bildwert aufgerufen ist, der dem gleichen Bildpunkt zugeordnet ist, wie derjenige Bildwert, der gerade vom Analog-Digital-Wandler 8 geliefert wird.

Diese beiden Bildwerte werden in der Subtrahierschaltung 14 voneinander subtrahiert. Da der vom Analog-Digital-Wandler 8 gelieferte Bildwert der Absorption der Röntgenstrahlung sowohl durch den Hintergrund als auch durch die bewegte Struktur (Herzkranzgefäße) in einem bestimmten Bildpunkt entspricht, während der aus dem Speicher 13 ausgelesene Bildwert nur der Absorption durch den Hintergrund in diesem Bildpunkt entspricht, entspricht das Datenwort am Ausgang der Subtraktionsschaltung 14 der Absorption durch die bewegte Struktur in diesem Bildpunkt. Daher wird auf der Wiedergabeanordnung 12, die über den Digital-Analog-Wandler 11 mit dem Ausgang der Subtraktionsschaltung verbunden ist, nur die bewegte Struktur (Herzkranzgefäße) wiedergegeben.

Zur Erzeugung eines Maskenbildes wird ein in der Einheit 10 enthaltener Schalter 15 durch eine Steuerschaltung 16 in die in Fig. 2 nicht dargestellte Stellung gebracht, und zwar zu Beginn des ersten Projektionsbildes. Dieses Projektionsbild wird dann vollständig in den Speicher 13 geladen. Es wird dann in einer arithmetisch logischen Einheit 17 mit dem jeweils nächsten Projektionsbild punktweise verglichen. Zu diesem Zweck ist ein Eingang der arithmetisch logischen Einheit 17 mit dem Ausgang des Analog-Digital-Wandlers 8 und ein anderer Eingang mit dem Ausgang des Speichers 13 verbunden, so daß die Bildwerte des im Speicher 13 enthaltenen Bildes mit den Bildwerten des jeweiligen Projektionsbildes verglichen werden. Derjenige der beiden Bildwerte, der der geringeren Absorption entspricht, wird in den Speicher 13 dem betreffenden Bildpunkt zugeordnet. Wiederholt man dies für mehrere Projektionsbilder, so sind in dem Speicher 13 anschließend die Bildwerte gespeichert, die jeweils der geringsten Absorption in dem betreffenden Bildpunkt entsprechen. Geht man davon aus, daß die bewegten Strukturen in einzelnen Phasen bzw. Projektionsbildern den betreffenden Bildpunkt bedecken und in anderen nicht, dann entspricht der in dem Speicher 13 für diesen Bildpunkt gespeicherte Bildwert der Absorption der Röntgenstrahlung durch den Hintergrund allein, so daß schließlich im Speicher 13 ein Bild des Hintergrundes gespeichert ist, das als Maskenbild dient.

Es ist nicht erforderlich, daß alle Projektionsbilder eines Herzzyklus in der geschilderten Weise zur Erzeugung eines Maskenbildes herangezogen werden. Es genügt, wenn dazu nur die Projektionsbilder verwendet werden, die die bewegte Struktur in deutlich unterschiedlichen Bewegungsphasen zeigen. Im allgemeinen ergeben sich schon bei nur drei bis fünf Projektionsbildern gute Maskenbilder. Die Auswahl dieser Projektionsbilder geschieht mit einer EKG-Triggerschaltung 17, mit der jeweils die Herzaktion mit den schnellsten Bewegungen (systolische Phase) erfaßt werden kann. Das vom EKG gewonnene Signal wird z.B. von der R-Zacke aus verzögert, um in die systolische Phase zu kommen, in der die Herzkranzgefäße die maximale Bewegung haben. Die Größe der Verzögerung ist von der Herzfrequenz abhängig. Das verzögerte R-Zackensignal wird dann der Steuerschaltung 16 (Bildzähler) zugeführt, der außer dem Schalter 15 auch die Subtrahierschaltung steuert. Von den in dieser Phase erzeugten Projektionsbildern wird das Maskenbild abgeleitet.

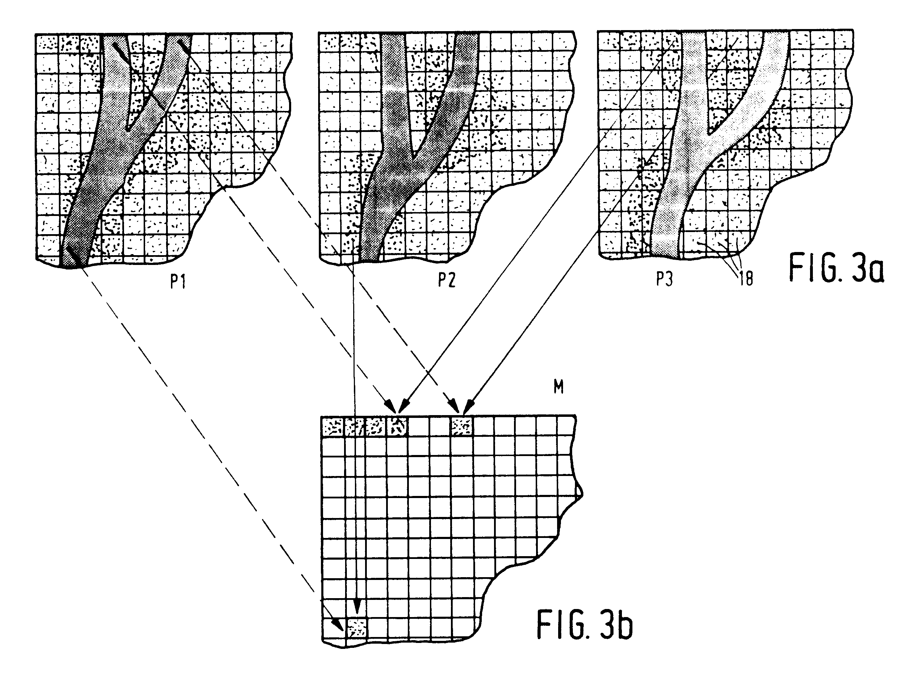

Zur Erläuterung des erfindungsgemäßen Verfahrens sind in Fig. 3 die einander entsprechenden Ausschnitte dreier Projektionsbilder P1, P2, P3 dargestellt. Jedes Projektionsbild setzt sich aus einer Vielzahl von quadratischen Bildpunkten zusammen, von denen einige bei P3 miit 18 bezeichnet sind. Außerdem ist mit M ein entsprechender Ausschnitt des Maskenbildes dargestellt. Die drei ersten Bildpunkte der ersten Zeile eines jeden Projektionsbildes haben annähernd die gleichen Bildwerte, so daß es praktisch nur vom Rauschen oder anderen Störungen abhängt, aus welchen der Projektionsbilder die Bildwerte für die drei ersten Bildpunkte gewonnen werden. Anders ist es jedoch bei dem vierten Bildpunkt der ersten Zeile. Dieser wird in den Projektionsbildern P1 und P2 durch ein mit Kontrastmittel gefülltes Gefäß verdeckt, das beim Projektionsbild P3 erst den fünften Bildpunkt bedeckt. Wie durch die gestrichelten und ausgezogenen Pfeile angedeutet, die den vierten Bildpunkt der ersten Zeile in den Projektionsbildern mit dem entsprechenden Bildpunkt in dem Maskenbild M verbinden, wird der Bildwert des vierten Bildpunktes des Projektionsbildes P3 für das Maskenbild herangezogen (durchgezogener Pfeil), weil er der geringsten Absorption entspricht. Auf diese Weise werden alle Projektionsbilder Bildpunkt für Bildpunkt miteinander verglichen und in das Maskenbild M wird jeweils der Bildwert entnommen, der der geringsten Absorption entspricht. Das im Anschluß an diese Prozedur entstandene Maskenbild stellt daher im wesentlichen den nicht bewegten Hintergrund dar; die Herzkranzgefäße sind in dem Maskenbild praktisch nicht mehr enthalten. Das so berechnete Maskenbild wird dann von den Projektionsbildern - auch anderer Herzzyklen - abgezogen.

Vorstehend wurde angenommen, daß der Hintergrund während der Aufnahme der Projektionsbilder sich nicht bewegt. Diese Voraussetzung gilt sicher für ein oder zwei Herzzyklen bei einer Untersuchung der Herzkranzgefäße, jedoch bewegt sich der Hintergrund bei längeren Untersuchungszeiten - beispielsweise infolge der Atmung des Patienten. Man kommt dann nicht mehr mit einem Maskenbild aus, weil der Hintergrund sich während der Untersuchung bewegt hat. Es ist deshalb erforderlich, in bestimmten zeitlichen Abständen ein neues Maskenbild zu erzeugen - beispielsweise jeweils nach ein oder zwei Herzzyklen. Wird bei jedem Herzzyklus ein Maskenbild erzeugt, dann kann dieses zur Subtraktion mit den Projektionsbildern des folgenden Herzzyklus benutzt werden. In diesem Fall wird mit zwei Speichern gearbeitet, von denen einer das gerade zur Subtraktion benutzte Maskenbild speichert, während der andere zur Aufnahme des anschließend verwendeten Maskenbildes dient. Dabei müßte der eine Eingang der arithmetisch logischen Einheit 17 allerdings ständig mit dem Ausgang des Analog-Digital-Wandlers 8 verbunden sein.

Vorstehend wurde von einer Online-Verarbeitung ausgegangen, bei der die bewegte Struktur am Bildwiedergabegerät 12 betrachtet werden kann, noch während sie von der Röntgenaufnahmeeinrichtung 1, 4...7 aufgenommen wird. Es ist aber auch möglich, eine bereits - beispielsweise mit der Cine-Kamera 6 aufgenommene - Bildfolge nachträglich zu verarbeiten. Dazu müssen die Einzelbilder lediglich durch einen Digitalisierer in den Bildwerten an den einzelnen Bildpunkten entsprechende Datenworte umgesetzt werden. Die Bildfolgen können auch gleich digital gespeichert werden. Wenn die gesamte Bildfolge gespeichert vorliegt, können die Projektionsbilder eines Herzzyklus von dem aus Projektionsbildern des gleichen Herzzyklus erzeugten Maskenbild subtrahiert werden. Dies ist der Idealfall.

## Patentansprüche

1. Verfahren zum Trennen bewegter Strukturen von festem Hintergrund in einer Folge von Röntgen-Projektionsbildern eines zu untersuchenden Objektes, wobei von jedem Projektionsbild (P1..P3) der Folge ein dem Hintergrund zugeordnetes Maskenbild (M) subtrahiert wird, das Bildpunkt für Bildpunkt aus den Bildwerten von Projektionsbildern der Folge abgeleitet wird,
dadurch gekennzeichnet, daß zur Erzeugung des Maskenbildes (M) die Bildwerte mehrerer Projektionsbilder (P1..P3) der Folge verglichen werden und daß derjenige Bildwert, der der geringsten Absorption entspricht, den Bildwert für den betreffenden Bildpunkt des Maskenbildes (M) bildet.

2. Verfahren nach Anspruch 1 zur angiographischen Untersuchung von Herzkranzgefäßen,
dadurch gekennzeichnet, daß - durch EKG-Signale gesteuert - die Projektionsbilder, die während der schnellen Herzphase auftreten, zur Erzeugung des Maskenbildes herangezogen werden.

3. Verfahren nach Anspruch 1 zur angiographischen Untersuchungen von Herzkranzgefäßen,
dadurch gekennzeichnet, daß die Erzeugung der Maskenbilder bei der Folge mehrmals wiederholt wird.

4. Verfahren nach einem der vorhergehenden Ansprüche,
dadurch gekennzeichnet, daß das aus den Projektionsbildern (P1...P3) eines Herzzyklus hergestellte Maskenbild von den Projektionsbildern des darauffolgenden Herzzyklus subtrahiert wird.

5. Verfahren nach einem der Ansprüche 1 bis 3,
dadurch gekennzeichnet, daß das Maskenbild aus Projektionsbildern eines Herzzyklus erstellt wird und daß es anschließend von den gespeicherten Projektionsbildern dieses Herzzyklus erstellt wird.

6. Vorrichtung zur Durchführung des Verfahrens nach Anspruch 1 mit einer Strahlenquelle (1) und einer Bildaufnahmeeinrichtung (4) zur Erzeugung einer Folge von Röntgenprojektionsbildern und einem Bildwandler (5,8), der die Projektionsbilder in den Bildwerten entsprechende digitale Datenworte umsetzt,
gekennzeichnet durch einen Extremwertdekoder (17), dem gleichzeitig oder nacheinander die jeweils einem Bildpunkt in verschiedenen Projektionsbildern (P1..P3) der Folge zugeordneten Datenworte zugeführt werden und dessen Ausgang dasjenige Datenwort liefert, das der geringsten Absorption entspricht, durch einen Speicher (13) für die Aufnahme der auf diese Weise erzeugten Maskenbildwerte und durch eine Subtrahierschaltung (14) zur Subtraktion der Bildwerte der Projektionsbilder dieser Folge und der Maskenbildwerte.

7. Vorrichtung nach Anspruch 6,
dadurch gekennzeichnet, daß der Extremwertdekoder eine arithmetisch logische Einheit (17) enthält, an deren einem Eingang nacheinander die den einzelnen Bildpunkten (18) eines Projektionsbildes zugeordneten Datenworte anliegen und an deren anderem mit dem Speicher (13) gekoppelten Eingang jeweils das für denselben Bildpunkt gespeicherte Datenwort anliegt und die dasjenige der beiden Datenworte, das der geringeren Absorption entspricht, in den Speicher lädt.

## Claims

1. A method for the separation of moving structures from the fixed background in a sequence of X-ray projection images of a object to be examinated, wherein a mask image (M) assigned to the background and derived picture element by picture element from the picture values of projection images of the sequence is subtracted from each projection image (P1...P3) of the sequence, characterized in that, in order to generate the mask image (M), the picture values of several projection images (P1....P3) of the sequence are compared and the picture value corresponding to the lowest absorption forms the picture value for the relevant picture element of the mask image (M).

2. A method as claimed in Claim 1 for angiographic examination of coronary vessels, characterized in that, under the control of ECG signals, the projection images occurring during the fast cardiac phase are used to generate the mask image.

3. A method as claimed in Claim 1 for angiographic examination of coronary vessels, characterized in that, the generation of the mask images is repeated several times for the sequence.

4. A method as claimed in ay one of the preceding Claims, characterized in that, the mask image produced from the projection images (P1...P3) of a cardiac cycle is subtracted from the projection images of the subsequent cardiac cycle.

5. A method as claimed in ay one of Claims 1 to 3, characterized in that the mask image is generated from projection images of a cardiac cycle and is subsequently subtracted from the stored projection images of this cardiac cycle.

6. A device for carrying out the method claimed in Claim 1 comprising a radiation source (1) and a picture pick-up device for the production of a sequence of X-ray projection images and a image converter (5, 8) which converts the projection images into digital data words corresponding to the picture values, characterized in that, it comprises an extreme value-decoder which receives simultaneously or successively, the data words each time assigned to a picture element in different projection images (P1...P3), of the sequence its output delivering the data word which corresponds to the lowest absorption, a memory (13) for storing the mask images thus generated, and a subtraction circuit (14) for subtraction of the picture values of the projection images of this sequence and the mask image values.

7. A device as claimed in Claim 6, characterized in that, the extreme-value decoder comprises an arithmetic and logic unit (17), one input of which successively carries the data words assigned to the individual picture elements (18) of a projection image, and the other input of which, being connected to the memory (13) successively carries each time the data word stored for the same picture element, and which loads that one of the data words which corresponds to the lower absorption, into the memory.

## Revendications

1. Procédé pour la séparation de structures mobiles d'un fond fixe dans une suite d'images de projection à rayons X d'un objet à examiner, suivant lequel est soustraite de chaque image de projection (P1, ..., P3) de la suite, une image de masque (M) associée au fond, qui est dérivée, point d'image pour point d'image, des valeurs d'image d'images de projection de la suite, caractérisé en ce que pour élaborer l'image de masque (M), on compare les valeurs d'image de plusieurs images de projection (P1, ..., P3) de la suite et que la valeur d'image qui correspond à l'absorption la plus faible forme la valeur d'image pour le point d'image en question de l'image de masque (M).

2. Procédé suivant la revendication 1 pour l'examen angiographique des artères coronaires, caractérisé en ce que, sous la commande de signaux d'électrocardiogramme, les images de projection qui apparaissent pendant la phase cardiaque rapide sont utilisées pour l'élaboration de l'image de masque.

3. Procédé suivant la revendication 1, pour l'examen angiographique des artères coronaires, caractérisé en ce que l'élaboration des images de masque est répétée plusieurs fois pour la suite.

4. Procédé suivant l'une quelconque des revendications précédentes, caractérisé en ce que l'image de masque élaborée à partir des images de projection (P1, ..., P3) d'un cycle cardiaque est soustraite des images de projection du cycle cardiaque suivant.

5. Procédé suivant l'une quelconque des revendications 1 à 3, caractérisé en ce que l'image de masque est élaborée à partir d'images de projection d'un cycle cardiaque et qu'elle est ensuite élaborée à partir des images de projection stockées de ce cycle cardiaque.

6. Dispositif pour l'exécution du procédé suivant la revendication 1, comportant une source de rayonnement (1) et un dispositif de prise d'images (4) pour la production d'une suite d'images de projection à rayons X et un convertisseur d'images (5, 8) qui convertit les images de projection en mots de données numériques correspondant aux valeurs d'image, caractérisé par un décodeur de valeurs extrêmes (17) auquel sont appliqués, simultanément ou consécutivement, les mots de données associés chaque fois à un point d'image dans diverses images de projection (P1, ..., P3) de la suite et dont la sortie fournit le mot de données qui correspond à l'absorption la plus faible, par une mémoire (13) pour le stockage des valeurs d'image de masque produites de cette façon et par un circuit soustracteur (14) pour la soustraction des valeurs d'image des images de projection de cette suite et des valeurs d'image de masque.

7. Dispositif suivant la revendication 6, caractérisé en ce que le décodeur de valeurs extrêmes comprend une unité logique arithmétique (17), à l'une des entrées de laquelle sont appliqués successivement les mots de données associés aux points d'image individuels (18) d'une image de projection et à l'autre entrée, connectée à la mémoire (13), de laquelle est appliqué chaque fois le mot de données stocké pour le même point d'image et qui charge dans la mémoire celui des deux mots de données qui correspond à la plus faible absorption.
